Europäisches Patentamt

European Patent Office

Office européen des brevets

(11) Publication number: 0 403 204
A2

# EUROPEAN PATENT APPLICATION

(21) Application number: 90306339.4

(51) Int. Cl.5: H04M 1/72

(22) Date of filing: 11.06.90

(30) Priority: 16.06.89 GB 8913930

(43) Date of publication of application:
19.12.90 Bulletin 90/51

(84) Designated Contracting States:
AT BE CH DE DK ES FR GB GR IT LI LU NL SE

(71) Applicant: FERRANTI CREDITPHONE LIMITED
St. Mary's Road
Moston, Manchester M10 OBE(GB)

(72) Inventor: Buisseret, Timothy J.
29 Bevill Square, St Stephens
Salford, Lancashire M3 6BB(GB)
Inventor: Pickin, John R.
Keeper's Cottages, Henshaw Lane,
Siddington
Macclesfield, Cheshire SK11 9JW(GB)

(74) Representative: Morton, Colin David et al
Keith W Nash & Co. Pearl Assurance House
90-92 Regent Street
Cambridge CB2 1DP(GB)

(54) Cordless telephone systems and methods of operation.

(57) A method of transferring an identity from a portable handset to a base station in a cordless telephone system, comprises coding the identity by a first function (F) in the handset and transmitting the coded identity from the handset to the base station. The coded identity is further coded by a second function (G) in the base station, and the doubly coded identity is transmitted from the base station to the handset. In the handset the doubly coded function is decoded with respect to the first function (F) to produce the identity still coded by the second function, which is transmitted from the handset to the base station where decoding with respect to the second function (G) gives the identity.

## Cordless Telephone Systems and Methods of Operation

### Field of the Invention

This invention relates to cordless telephone systems and to methods of operation of such systems.

### Background to the Invention

A known cordless telephone system (so-called "telepoint" system) comprises a plurality of fixed base stations which are connected to the public switched telephone network (PSTN). Subscribers to the system have cordless telephones in the form of portable handsets which are capable of establishing radio communication with an in-range base station.

Each handset has a personal identification number (PID) which is stored within it. By applying a mathematical process to the PID an authorisation code (AUC) can be derived from it. The AUC is then given to each telepoint handset owner when he or she registers on the cordless telephone service. Before a call is made by the telepoint handset owner to an in-range telepoint base station, the AUC has initiallly to be entered into the handset. Thereafter, when a call is made, both PID and AUC are then transmitted by radio to the telepoint base station. The telepoint base station has the means to carry out the same mathematical process which derived the AUC. It then does this and checks that the AUC is correct. The telepoint handset owner is then given a dialling tone so that he can make a call in the normal way.

Should a telepoint handset be stolen and taken apart the PID and AUC cannot be obtained directly because this information is on a silicon integrated circuit which is encapsulated in a manner which ensures that the integrity of the encapsulation cannot be breached without destroying the imprinted data. If the chip is replaced by a new chip and a new PID is imprinted on the new chip, then the mathematical process for deriving a suitable AUC is not known and is virtually impossible to derive.

A similar situation applies to cashpoint cards which have an authorisation code which can be read but which does not then enable the correct PIN to be calculated therefrom. In the case of cash point cards the transfer of the PIN takes place at the cash point terminal and unless this process can be overseen by the thief the PIN cannot be known.

In the case of cordless telephone systems the transfer of the authorisation code and the PID takes place by radio. This represents a weakness which could be exploited by an unauthorised user: the signals which result in successful access to the telepoint system could be arranged to be duplicated by an unauthorised user who could then for a period use the system fraudulently. Encryption of the authorisation code and PID before transmission does not provide a defence against such fraud because the encrypted transmission can be intercepted and duplicated. Such an encryption method can be successful if the encryption key is changed for each transmission. It is necessary for the telepoint base station to be able to decode the message before the authorisation number and PID can be checked. It therefore needs to know the key that has been used in the encryption process. The secure management of keys within a telepoint base station which may have to respond to any one of many hundreds of thousands of hand sets each of which is working its way through some stored sequence of encoding keys is not practical.

It is an object of the invention to provide a method of defending the transmission of authorisation number and PID which does not involve the prior knowledge of encryption keys by the telepoint handset and telepoint base station. The method makes use of the fast two way digital transfer of data that is possible between handset and base station. This could be typically 32,000 bits of binary information per second in each direction.

### Summary of the Invention

According to one aspect of the invention a method of transferring an identity from a portable handset to a base station in a cordless telephone system comprises:

(i) coding the identity by a first function in the handset,

(ii) storing the first function in the handset,

(iii) transmitting the coded identity from the handset to the base station,

(iv) further coding the coded identity by a second function in the base station to provide a doubly coded identity,

(v) storing the second function in the base station,

(vi) transmitting the doubly coded identity from the base station to the handset,

(vii) decoding the doubly coded identity in the handset by application of the first function to provide the identity coded by the second function,

(viii) transmitting the identity coded by the second function from the handset to the base station, and

(ix) decoding the identity coded by the second function with respect to the second function in the base station to give the identity.

The identity can be anything which identifies the portable handset. In the case of the telepoint system previously described the identity will be representative of the PID and AUC. It will be appreciated that during the transfer the identity is always coded and at no time has the encryptian function had to be transferred between the handset and the base station.

The first function and the second function may be constant in the sense that they do not vary with time, but it is preferred that each of the first function and the second function varies with time as a result of each having a randomly generated key. In this case the key is stored at steps (ii) and (v).

According to another aspect of the invention a cordless telephone system comprises a plurality of base stations and portable handsets, wherein each portable handset is equipped with an identity which is verified at a base station with which a portable handset user wishes to establish communication, by means which:

(i) code the identity by a first function in the handset,

(ii) store the first function in the handset,

(iii) transmit the coded identity from the handset at the base station,

(iv) further code the coded identity by a second function in the base station to provide a doubly coded identity,

(v) store the second function in the base station,

(vi) transmit the doubly coded identity from the base station to the handset,

(vii) decode the doubly coded identity in the handset by application of the first function to provide the identity coded by the second function,

(viii) transmit the identity coded by the second function from a handset to the base station, and

(ix) decode the identity coded by the second function with respect to the second function in the base station to give the identity.

The invention can be explained by analogy with a simple mechanical model. This is a briefcase equipped with two combination locks. Data, the secure transmission of which is required, is placed in the briefcase by the sender who then sets one combination lock to a combination (key 1) which is known only to him. The briefcase is then delivered to the intended recipient who cannot open it but who then sets the second lock to a combination (key 2) which is known only to him. The brief case is then returned to the sender who, using key 1 which he has retained in his memory, undoes the first lock and returns the briefcase to the recipient. The recipient then uses key 2 which he has retained in his memory to undo the briefcase and extract the data. At all times during the transfer the brief case has been securely locked and at no time has a key had to be transferred between sender and recipient.

In a preferred embodiment of the invention the PID and AUC are encrypted by a first mathematical function F using a key A which has been randomly generated on a silicon integrated circuit of the handset. Key A is stored within the silicon integrated circuit of the handset. The encrypted PIP and AUC are then transmitted to the telepoint base station. The telepoint base station then encrypts the received signal using a second function G and a randomly generated key B which is in turn stored on a silicon chip within the telepoint base station. The PIP and AUC encrypted by both functions F and G are then returned to the telepoint handset. In the handset the signal is decoded in respect to function F using the stored key A. The PID and AUC encrypted now only by function G are returned to the telepoint base station where they are decoded in respect of function G using key B. Functions F and G must be such that their effect on the data to be transmitted is the same irrespective of the order in which they operate. Such functions exist and are called commutative functions.

## Brief Description of the Drawings

The invention will now be further described by way of example by reference to the accompanying drawings, in which:

Figure 1 shows a chain of 64 binary digits which would not in practice be sufficient to represent an actual PID and AUC but will serve to illustrate the inventive process,

Figure 2 shows the same 64 binary digits written in an 8 x 8 matrix writing from left to right in successive rows,

Figure 3 shows the digits of Figure 2 coded by a first function F,

Figure 4 shows the coded digits further coded by function G,

Figure 5 shows the digits decoded in respect of function F,

Figure 6 shows the digits decoded in respect of function G, and

Figure 7 shows the decoded chain of 64 binary digits, which correspond to the chain of Figure 1.

## Design of the Preferred Embodiment

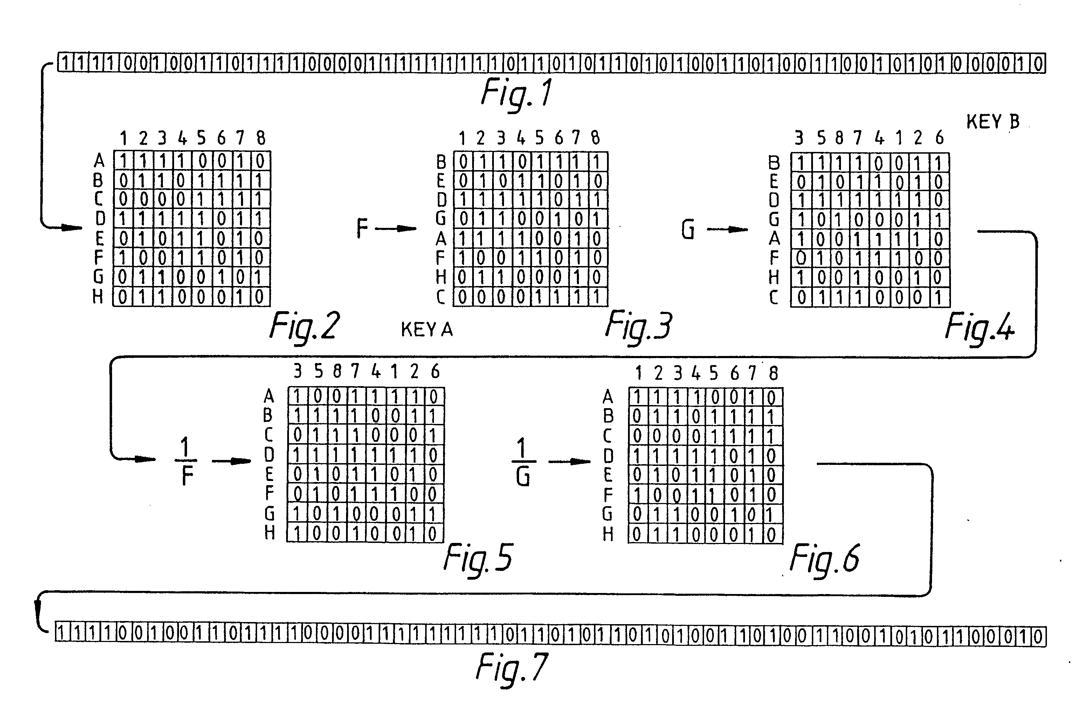

The chain of 64 binary digits shown in Figure 1 represents the identity of a particular handset, and Figure 2 shows the digits written in an 8 x 8 matrix. By way of illustration function F is the function of scrambling the rows in accordance with some random new order of rows, this new order being represented by key A. Figure 3 shows the result of this operation. This would represent by way of example only the signal sent to the telepoint base station as a sequence of 64 binary digits read from a matrix. Key A is randomly generated on a silicon integrated circuit in the handset, and the particular key which is used to code the matrix of Figure 3 is stored in the handset. In the telepoint base station the signal is read into a similar matrix. In the base station function G is applied, function G being the function of scrambling the columns in accordance with some new order of columns which is identified as key B. Figure 4 shows the result of this operation. Key B is randomly generated on a silicon chip within the telepoint base station and the particular key which generates Figure 4 is stored in the base station. The signal, now doubly coded by functions F and G with their respective keys A and B, is now sent back from the base station to the handset.

The handset decodes the received signal, using key A, in order to provide the matrix shown in Figure 5. The binary digits of Figure 5 are then read out and transmitted from the handset to the base station which, using key B, decodes the columns to give the matrix shown in Figure 6. The matrix shown in Figure 6 has now been doubly decoded and therefore corresponds to the original 64 binary digit matrix shown in Figure 2. From Figure 6 is derived the 64 binary digit sequence shown in Figure 7, this corresponding to the sequence illustrated in Figure 1.

The above example is for illustrative purposes only. In the example simple functions have been used acting on a limited number of 8 bit segments. It is possible to see what transformations have happened without ambiguity. The situation was chosen in order that the illustrations can be understood. In practice much more complex functions can be used which would operate on a larger number of elements so that a great deal of ambiguity would be present in any attempt to back track. In such a practical situation more effort would be required to unravel the transformation than would be warranted by the potential benefit in free telephone calls before the fraud is detected.

A different and random key is used for each transfer sequence of the authorisation number and PID, so that a radio picking up the signals would get a different encrypted signal each time. If the sequence is recorded and entered in the handset and sent to the telepoint base station then the transfer cannot be completed unless the handset also has the stored key necessary to decode and return the message which would be returned to the handset by the telepoint base station as a result of sending the recorded message to the telepoint base station.

## Claims

1. A method of transferring an identity from a portable handset to a base station in a cordless telephone system, comprising

(i) coding the identity by a first function in the handset

(ii) storing the first function in the handset,

(iii) transmitting the coded identity from the handset to the base station,

(iv) further coding the coded identity by a second function in the base station to provide a doubly coded identity,

(v) storing the second function in the base station,

(vi) transmitting the doubly coded identity from the base station to the handset,

(vii) decoding the doubly coded identity in the handset by application of the first function to provide the identity coded by the second function,

(viii) transmitting the identity coded by the second function from the handset to the base station, and

(ix) decoding the identity coded by the second function with respect to the second function in the base station to give the identity.

2. A method according to claim 1, wherein the first function varies with time as a result of being coded in accordance with a time-varying first key.

3. A method according to claim 2, wherein the first key is generated in the handset and the particular first key which codes the first function is stored in the handset, for subsequent decoding in the handset.

4. A method according to any of the preceding claims, wherein the second function varies with time as a result of being coded in accordance with a time-varying second key.

5. A method according to claim 4, wherein the second key is generated in the base station and the particular second key which codes the second function is stored in the base station, for subsequent decoding in the base station.

6. A cordless telephone system comprising a plurality of base stations and portable handsets, wherein each portable handset is equipped with an identity which is verified at a base station with which a portable handset user wishes to establish communication, by means which:

(i) code the identity by a first function in the handset,

(ii) store the first function in the handset,

(iii) transmit the coded identity from the handset at the base station,

(iv) further code the coded identity by a second function in the base station to provide a doubly coded identity,

(v) store the second function in the base station,

(vi) transmit the doubly coded identity from the base station to the handset,

(vii) decode the doubly coded identity in the handset by application of first function to provide the identity coded by the second function,

(viii) transmit the identity coded by the second function from the handset to the base station, and

(ix) decode the identity coded by the second function with respect to the second function in the base station to give the identity.

EP 0 403 204 A2

`1 1 1 1 0 0 1 0 0 1 1 0 1 1 1 1 0 0 0 0 1 1 1 1 1 1 1 1 1 0 1 1 0 1 0 1 0 1 1 0 1 0 1 0 0 1 1 0 1 0 0 1 1 0 0 1 0 1 0 1 0 0 0 0 0 1 0`

*Fig.1*

**Fig.2**

|   | 1 | 2 | 3 | 4 | 5 | 6 | 7 | 8 |
|---|---|---|---|---|---|---|---|---|
| A | 1 | 1 | 1 | 1 | 0 | 0 | 1 | 0 |
| B | 0 | 1 | 1 | 0 | 1 | 1 | 1 | 1 |
| C | 0 | 0 | 0 | 0 | 1 | 1 | 1 | 1 |
| D | 1 | 1 | 1 | 1 | 1 | 0 | 1 | 1 |
| E | 0 | 1 | 0 | 1 | 1 | 1 | 1 | 0 |
| F | 1 | 0 | 0 | 1 | 1 | 0 | 1 | 0 |
| G | 0 | 1 | 1 | 0 | 0 | 1 | 0 | 1 |
| H | 0 | 1 | 1 | 0 | 0 | 0 | 1 | 0 |

*Fig.2*

F →

**Fig.3** — KEY A

|   | 1 | 2 | 3 | 4 | 5 | 6 | 7 | 8 |
|---|---|---|---|---|---|---|---|---|
| B | 0 | 1 | 1 | 0 | 1 | 1 | 1 | 1 |
| E | 0 | 0 | 1 | 0 | 1 | 1 | 0 | 1 |
| D | 1 | 1 | 1 | 1 | 1 | 0 | 1 | 1 |
| G | 0 | 1 | 1 | 0 | 0 | 1 | 0 | 1 |
| A | 1 | 1 | 1 | 1 | 0 | 0 | 1 | 0 |
| F | 1 | 0 | 0 | 1 | 1 | 0 | 1 | 0 |
| H | 0 | 1 | 1 | 0 | 0 | 0 | 1 | 0 |
| C | 0 | 0 | 0 | 0 | 1 | 1 | 1 | 1 |

*Fig.3*

G →

KEY B

**Fig.4**

|   | 3 | 5 | 8 | 7 | 4 | 1 | 2 | 6 |
|---|---|---|---|---|---|---|---|---|
| B | 1 | 1 | 1 | 1 | 0 | 0 | 1 | 1 |
| E | 0 | 1 | 0 | 1 | 1 | 0 | 1 | 0 |
| D | 1 | 1 | 1 | 1 | 1 | 1 | 1 | 0 |
| G | 1 | 0 | 1 | 0 | 0 | 0 | 1 | 1 |
| A | 1 | 0 | 1 | 0 | 1 | 1 | 1 | 0 |
| F | 0 | 1 | 0 | 1 | 1 | 1 | 0 | 0 |
| H | 1 | 0 | 0 | 1 | 0 | 0 | 1 | 0 |
| C | 0 | 1 | 1 | 1 | 0 | 0 | 0 | 1 |

*Fig.4*

$\frac{1}{F}$ →

**Fig.5**

|   | 3 | 5 | 8 | 7 | 4 | 1 | 2 | 6 |
|---|---|---|---|---|---|---|---|---|
| A | 1 | 0 | 0 | 1 | 1 | 1 | 1 | 0 |
| B | 1 | 1 | 1 | 1 | 0 | 0 | 1 | 1 |
| C | 0 | 1 | 1 | 1 | 0 | 0 | 0 | 1 |
| D | 1 | 1 | 1 | 1 | 1 | 1 | 1 | 0 |
| E | 0 | 1 | 0 | 1 | 1 | 0 | 1 | 0 |
| F | 0 | 1 | 0 | 1 | 1 | 1 | 0 | 0 |
| G | 1 | 0 | 1 | 0 | 0 | 0 | 1 | 1 |
| H | 1 | 0 | 0 | 1 | 0 | 0 | 1 | 0 |

*Fig.5*

$\frac{1}{G}$ →

**Fig.6**

|   | 1 | 2 | 3 | 4 | 5 | 6 | 7 | 8 |
|---|---|---|---|---|---|---|---|---|
| A | 1 | 1 | 1 | 1 | 0 | 0 | 1 | 0 |
| B | 0 | 1 | 1 | 0 | 1 | 1 | 1 | 1 |
| C | 0 | 0 | 0 | 0 | 1 | 1 | 1 | 1 |
| D | 1 | 1 | 1 | 1 | 1 | 0 | 1 | 1 |
| E | 0 | 1 | 0 | 1 | 1 | 1 | 1 | 0 |
| F | 1 | 0 | 0 | 1 | 1 | 0 | 1 | 0 |
| G | 0 | 1 | 1 | 0 | 0 | 1 | 0 | 1 |
| H | 0 | 1 | 1 | 0 | 0 | 0 | 1 | 0 |

*Fig.6*

`1 1 1 1 0 0 1 0 0 1 1 0 1 1 1 1 0 0 0 0 1 1 1 1 1 1 1 1 1 0 1 1 0 1 0 1 0 1 1 0 1 0 1 0 0 1 1 0 1 0 0 1 1 0 0 1 0 1 0 1 0 1 1 0 0 0 1 0`

*Fig.7*